# EUROPÄISCHE PATENTSCHRIFT

(11) **EP 1 521 927 B1**
(45) Veröffentlichungstag und Bekanntmachung des Hinweises auf die Patenterteilung: **16.01.2008**
(21) Anmeldenummer: 03763727.9
(22) Anmeldetag: 07.07.2003
(51) Int. Cl.: F16H 3/66

(54) **MEHRSTUFENGETRIEBE**
MULTI-STEP TRANSMISSION
BOITE DE VITESSES A PLUSIEURS ETAGES

(30) Priorität: 11.07.2002 DE 10231346
(43) Veröffentlichungstag der Anmeldung: 13.04.2005
(73) Patentinhaber: ZF FRIEDRICHSHAFEN AG, 88038 Friedrichshafen (DE)
(72) Erfinder: GUMPOLTSBERGER, Gerhard, 88045 Friedrichshafen (DE)
(86) Internationale Anmeldenummer: PCT/EP2003/007243
(87) Internationale Veröffentlichungsnummer: WO 2004/007999

(56) Entgegenhaltungen:
- EP-A- 0 378 900
- DE-A- 19 949 507
- PATENT ABSTRACTS OF JAPAN vol. 2000, no. 20, 10. Juli 2001 (2001-07-10) -& JP 2001 082555 A (AISIN AW CO LTD), 27. März 2001 (2001-03-27)

## Beschreibung

Die vorliegende Erfindung betrifft ein Mehrstufengetriebe in Planetenbauweise, insbesondere ein Automatgetriebe für ein Kraftfahrzeug gemäß dem Oberbegriff des Patentanspruchs 1.

Automatgetriebe, insbesondere für Kraftfahrzeuge, umfassen nach dem Stand der Technik Planetensätze, die mittels Reibungs- bzw. Schaltelementen wie etwa Kupplungen und Bremsen geschaltet werden und üblicherweise mit einem einer Schlupfwirkung unterliegenden und wahlweise mit einer Überbrückungskupplung versehenen Anfahrelement wie etwa einem hydrodynamischen Drehmomentwandler oder einer Strömungskupplung verbunden sind.

Ein derartiges Getriebe geht aus der EP 0 434 525 A1 hervor. Es umfasst im wesentlichen eine Antriebswelle und eine Abtriebswelle, die parallel zueinander angeordnet sind, einen konzentrisch zur Abtriebswelle angeordneten Doppelplanetenradsatz und fünf Schaltelemente in der Form von drei Kupplungen und zwei Bremsen, deren wahlweise Sperrung jeweils paarweise die verschiedenen Gangübersetzungen zwischen der Antriebswelle und der Abtriebswelle bestimmt. Hierbei weist das Getriebe einen Vorschaltradsatz und zwei Leistungswege auf, so dass durch das selektive paarweise Eingreifen der fünf Schaltelemente sechs Vorwärtsgänge erzielt werden.

Hierbei werden bei dem ersten Leistungsweg zwei Kupplungen zur Übertragung des Drehmomentes vom Vorschaltradsatz zu zwei Elementen des Doppelplanetenradsatzes benötigt. Diese sind in Kraftflussrichtung im wesentlichen hinter dem Vorschaltradsatz in Richtung Doppelplanetenradsatz angeordnet. Bei dem zweiten Leistungsweg ist eine weitere Kupplung vorgesehen, die diesen mit einem weiteren Element des Doppelplanetenradsatzes lösbar verbindet. Hierbei sind die Kupplungen derart angeordnet, dass der Innenlammelenträger den Abtrieb bildet.

Des weiteren ist aus der Druckschrift US 6,139,463 ein kompaktes Mehrstufengetriebe in Planetenbauweise, insbesondere für ein Kraftfahrzeug bekannt, welches zwei Planetenradsätze und einen Vorschaltradsatz sowie drei Kupplungen und zwei Bremsen aufweist. Bei diesem bekannten Mehrstufengetriebe sind bei einem ersten Leistungsweg zwei Kupplungen C-1 und C-3 zum Übertragen des Drehmoments vom Vorschaltradsatz zu den beiden Planetenradsätzen vorgesehen. Hierbei ist der Außenlamellenträger bzw. die Zylinder- bzw. Kolben- und Druckausgleichsseite der Kupplung C-3 mit einer ersten Bremse B-1 verbunden. Zudem ist der Innenlamellenträger der dritten Kupplung C-3 mit der Zylinder- bzw. Kolben- und Druckausgleichsseite der ersten Kupplung C-1 verbunden, wobei der Innenlamellenträger der ersten Kupplung C-1 abtriebsseitig angeordnet ist und mit einem Sonnenrad des dritten Planetenradsatzes verbunden ist.

Des weiteren ist aus der DE 199 49 507 A1 ,das ab nächtliegender stand der Technik angeschen wirds der Anmelderin ein Mehrstufengetriebe bekannt, bei dem an der Antriebswelle zwei nicht schaltbare Vorschaltradsätze vorgesehen sind, die ausgangsseitig zwei Drehzahlen erzeugen, die neben der Drehzahl der Antriebswelle wahlweise auf einen auf die Abtriebswelle wirkenden, schaltbaren Doppelplanetenradsatz durch selektives Schließen der verwendeten Schaltelemente derart schaltbar sind, dass zum Umschalten von einem Gang in den jeweils nächst folgenden höheren oder niedrigeren Gang von den beiden gerade betätigten Schaltelementen jeweils nur ein Schaltelement zu- oder abgeschaltet werden muss.

Des weiteren ist aus der DE 199 12 480 A1 ein automatisch schaltbares Kraftfahrzeuggetriebe mit drei Einsteg-Planetensätzen sowie drei Bremsen und zwei Kupplungen zum Schalten von sechs Vorwärtsgängen und einem Rückwärtsgang und mit einer Antriebs- sowie einer Abtriebswelle bekannt. Das automatisch schaltbare Kraftfahrzeuggetriebe ist derart ausgebildet, dass die Antriebswelle direkt mit dem Sonnenrad des zweiten Planetensatzes verbunden ist und dass die Antriebswelle über die erste Kupplung mit dem Sonnenrad des ersten Planetensatzes und/oder über die zweite Kupplung mit dem Steg des ersten Planetensatzes verbindbar ist. Zusätzlich oder alternativ ist das Sonnenrad des ersten Planetensatzes über die erste Bremse mit dem Gehäuse des Getriebes und/oder der Steg des ersten Planetensatzes über die zweite Bremse mit dem Gehäuse und/oder dem Sonnenrad des dritten Planetensatzes über die dritte Bremse mit dem Gehäuse verbindbar.

Der vorliegenden Erfindung liegt die Aufgabe zugrunde, ein Mehrstufengetriebe der eingangs genannten Art vorzuschlagen, bei dem der Bauaufwand optimiert wird und zudem der Wirkungsgrad in den Hauptfahrgängen hinsichtlich der Schlepp- und Verzahnungsverluste verbessert wird. Zudem sollen bei dem erfindungsgemäßen Mehrstufengetriebe geringe Momente auf die Schaltelemente und Planetensätze wirken sowie die Drehzahlen der Wellen, Schaltelemente und Planetensätze möglicht gering gehalten werden. Des weiteren soll die Anzahl der Gänge sowie die Getriebespreizung erhöht werden.

Diese Aufgabe wird erfindungsgemäß durch die Merkmale des Patentanspruches 1 gelöst. Weitere Vorteile und vorteilhafte Ausgestaltungen gehen aus den Unteransprüchen hervor.

Demnach wird ein erfindungsgemäßes Mehrstufengetriebe in Planetenbauweise vorgeschlagen, welches eine Antriebswelle und eine Abtriebswelle aufweist, welche in einem Gehäuse angeordnet sind. Des weiteren sind zumindest drei Einstegplanetensätze, mindestens sieben drehbare Wellen sowie zumindest sechs Schaltelemente, umfassend Bremsen und Kupplungen, vorgesehen, deren selektives Eingreifen verschiedene Übersetzungsverhältnisse zwischen der Antriebswelle und der Abtriebswelle bewirkt, sodass vorzugsweise sieben Vorwärtsgänge und ein Rückwärtsgang realisierbar sind.

Gemäß der vorliegenden Erfindung ist bei dem Mehrstufenschaltgetriebe vorgesehen, dass der Antrieb durch eine Welle erfolgt, welche ständig mit einem Element des ersten Planetensatzes verbunden ist und dass der Abtrieb über eine Welle erfolgt, welche mit dem Steg des zweiten Planetensatzes und dem Steg des dritten Planetensatzes verbunden ist. Des weiteren ist bei dem erfindungsgemäßen Mehrstufengetriebe vorgesehen, dass eine weitere Welle ständig mit einem weiteren Element des ersten Planetensatzes verbunden ist, dass eine weitere Welle ständig mit dem Hohlrad des zweiten Planetensatzes und dem Hohlrad des dritten Planetensatzes verbunden ist, dass eine andere Welle ständig mit dem Sonnenrad des dritten Planetensatzes verbunden ist, dass eine weitere Welle ständig mit dem Hohlrad des ersten Planetensatzes verbunden ist, und dass eine weitere Welle ständig mit dem Sonnenrad des zweiten Planetensatzes verbunden ist, wobei die Planetensätze mit Wellen und Schaltelementen gekoppelt sind. Hierbei kann erfindungsgemäß die Antriebswelle mit dem Sonnenrad oder dem Steg des ersten Planetensatzes verbunden sein, wobei dementsprechend die eine weitere mit dem ersten Planetensatz verbundene Welle mit dessen Steg bzw. Sonnenrad verbunden ist.

Der erste und der dritte Planetensatz sind erfindungsgemäß als Plus-Planetensätze ausgebildet; der zweite Planetensatz ist ein Minus-Planetensatz.

Durch die erfindungsgemäße Ausgestaltung des Mehrstufengetriebes ergeben sich geeignete Übersetzungen sowie eine erhebliche Erhöhung der Gesamtspreizung des Mehrstufengetriebes, wodurch eine Verbesserung des Fahrkomforts und eine signifikante Verbrauchsabsenkung bewirkt werden.

Das erfindungsgemäße Mehrstufengetriebe eignet sich für jedes Kraftfahrzeug, insbesondere für Personenkraftfahrzeuge und für Nutzkraftfahrzeuge, wie z. B. Lastkraftwagen, Busse, Baufahrzeuge, Schienenfahrzeuge, Gleiskettenfahrzeuge und dergleichen.

Darüber hinaus wird mit dem erfindungsgemäßen Mehrstufengetriebe durch eine geringe Anzahl an Schaltelementen, vorzugsweise vier Kupplungen und zwei Bremsen, der Bauaufwand erheblich reduziert. In vorteilhafter Weise ist es mit dem erfindungsgemäßen Mehrstufengetriebe möglich, ein Anfahren mit einem hydrodynamischen Wandler, einer externen Anfahrkupplung oder auch mit sonstigen geeigneten externen Anfahrelementen durchzuführen. Es ist auch denkbar, einen Anfahrvorgang mit einem im Getriebe integrierten Anfahrelement zu ermöglichen. Vorzugsweise eignet sich ein Schaltelement, welches im ersten Gang und in den Rückwärtsgängen betätigt wird.

Darüber hinaus ergibt sich bei dem erfindungsgemäßen Mehrstufengetriebe ein guter Wirkungsgrad in den Hauptfahrgängen bezüglich der Schlepp- und Verzahnungsverluste.

Des weiteren liegen geringe Momente in den Schaltelementen und in den Planetensätzen des Mehrstufengetriebes vor, wodurch der Verschleiß bei dem Mehrstufengetriebe in vorteilhafter Weise reduziert wird. Ferner wird durch die geringen Momente eine entsprechend geringe Dimensionierung ermöglicht, wodurch der benötigte Bauraum und die entsprechenden Kosten reduziert werden. Darüber hinaus liegen auch geringe Drehzahlen bei den Wellen, den Schaltelementen und den Planetensätzen vor.

Außerdem ist das erfindungsgemäße Getriebe derart konzipiert, dass eine Anpassbarkeit an unterschiedliche Triebstrangausgestaltungen sowohl in Kraftflussrichtung als auch in räumlicher Hinsicht ermöglicht wird.

Die Erfindung wird im folgenden anhand der Zeichnungen beispielhaft näher erläutert.
In diesen stellen dar:
- Fig. 1: eine schematische Ansicht einer bevorzugten Ausführungsform eines erfindungsgemäßen Mehrstufengetriebes;

- Fig. 2: eine schematische Ansicht einer weiteren bevorzugten Ausführungsform eines erfindungsgemäßen Mehrstufengetriebes und
- Fig. 3: ein Schaltschema für das erfindungsgemäße Mehrstufengetriebe gemäß Fig. 1 und Fig. 2.

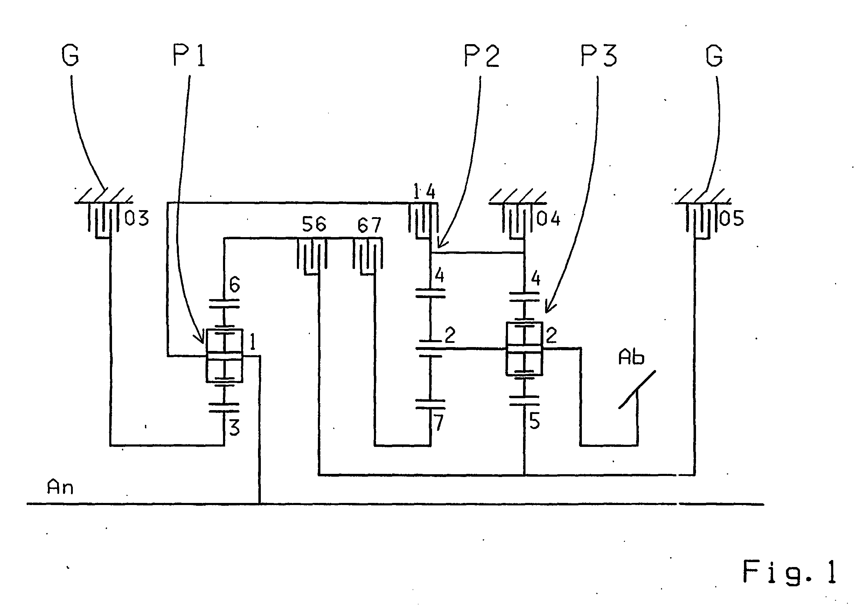

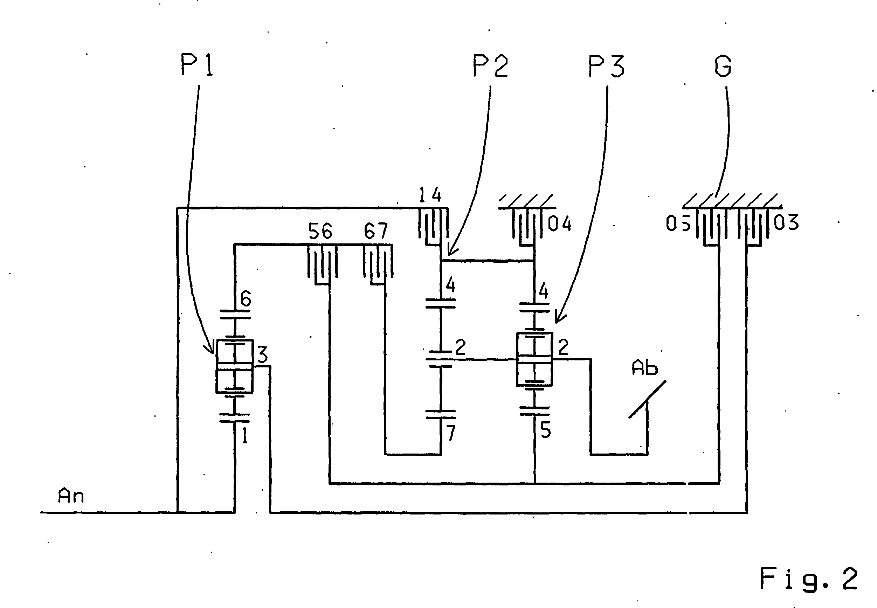

In den Fig. 1 und 2 ist das erfindungsgemäße Mehrstufengetriebe mit einer Antriebswelle 1 (An) und einer Abtriebswelle 2 (Ab) dargestellt, welche in einem Gehäuse G angeordnet sind. Es sind drei Einsteg-Planetensätze P1, P2, P3 vorgesehen. Hierbei sind der erste Planetensatz P1 und der dritte Planetensatz P3 als Plus-Planetensätze ausgebildet; der zweite Planetensatz P1 ist gemäß der Erfindung als Minus-Planetensatz ausgebildet.

Es ist auch möglich, dass der zweite Planetensatz P2 und der dritte Planetensatz P3 als Ravigneaux-Planetensatz mit gemeinsamen Steg und gemeinsamen Hohlrad zusammengefasst sind.

Wie aus den Fig. 1 und 2 ersichtlich, sind lediglich sechs Schaltelemente, nämlich drei Bremsen 03, 04, 05 sowie drei Kupplungen 14, 56, und 67 vorgesehen.

Mit den Schaltelementen ist ein selektives Schalten von sieben Vorwärtsgängen und einem Rückwärtsgang realisierbar. Das erfindungsgemäße Mehrstufengetriebe weist gemäß Fig. 1 insgesamt sieben drehbare Wellen auf, nämlich die Wellen 1, 2, 3, 4, 5, 6 und 7.

Erfindungsgemäß ist bei dem Mehrstufengetriebe gemäß Figur 1 vorgesehen, dass der Antrieb durch die Welle 1 erfolgt, welche ständig mit dem Steg des ersten Planetensatzes P1 verbunden ist. Der Abtrieb erfolgt über die Welle 2, welche mit dem Steg des zweiten Planetensatzes P2 und dem Steg des dritten Planetensatzes P3 verbunden ist. Des weiteren ist die Welle 3 ständig mit dem Sonnenrad des ersten Planetensatzes P1 und die Welle 4 ist ständig mit dem Hohlrad des zweiten Planetensatzes P2 und dem Hohlrad des dritten Planetensatzes P3 verbunden. Darüber hinaus ist die Welle 5 ständig mit dem Sonnenrad des dritten Planetensatzes P3 verbunden. Die weitere drehbare Welle 6 ist erfindungsgemäß ständig mit dem Hohlrad des ersten Planetensatzes P1 verbunden, wobei die Welle 7 ständig mit dem Sonnenrad des zweiten Planetensatzes P2 verbunden ist.

Bei dem erfindungsgemäßen Mehrstufengetriebe ist die Welle 3 durch die Bremse 03, die Welle 4 durch die Bremse 04 und die Welle 5 durch die Bremse 05 an das Gehäuse G ankoppelbar. Die Kupplung 14 verbindet die Welle 1 und die Welle 4 lösbar miteinander; die Welle 5 und die Welle 6 sind über die Kupplung 56 lösbar miteinander verbindbar. Des weiteren verbindet die Kupplung 67 die Wellen 6 und 7 lösbar miteinander.

In Fig. 2 ist eine weitere Ausführungsform des erfindungsgemäßen Mehrstufengetriebes gezeigt. Der einzige Unterschied gegenüber der Ausführungsform gemäß Fig. 1 besteht darin, dass die Antriebswelle 1 mit dem Sonnenrad des ersten Planetensatzes P1 verbunden ist und dass die Welle 3 ständig mit dem Steg des ersten Planetensatzes P1 verbunden ist.

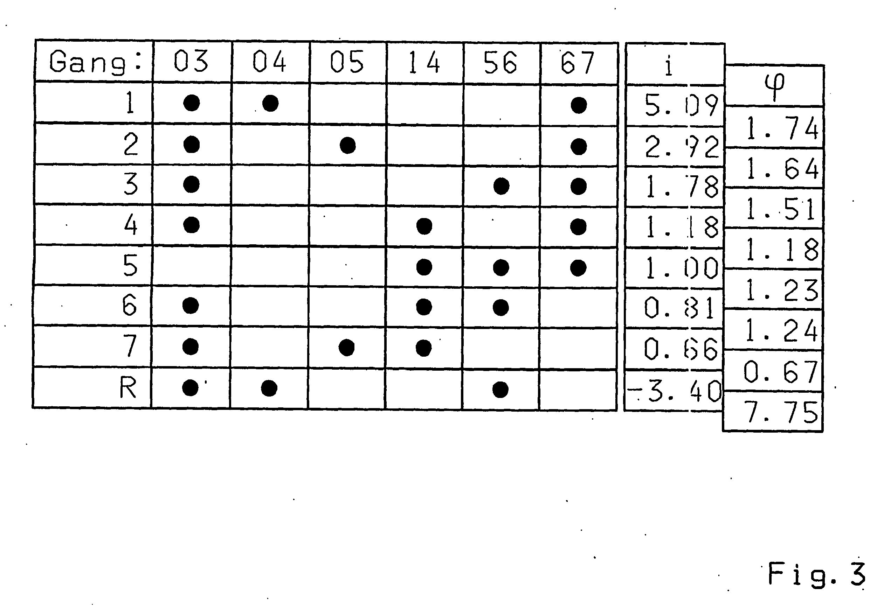

In Fig. 3 ist ein Schaltschema des erfindungsgemäßen Mehrstufengetriebes gemäß den Fig. 1 und 2 dargestellt. Dem Schaltschema können die jeweiligen Übersetzungen i der einzelnen Gangstufen und die daraus zu bestimmenden Stufensprünge ϕ beispielhaft entnommen werden. Des weiteren kann dem Schaltschema entnommen werden, dass bei sequentieller Schaltweise Doppelschaltungen vermieden werden, da zwei benachbarte Gangstufen jeweils zwei Schaltelemente gemeinsam benutzen.

Für die ersten vier Gänge ist die Bremse 03 ständig aktiviert; zusätzlich werden für den ersten Gang die Bremse 04 und die Kupplung 67, für den zweiten Gang die Bremse 05 und die Kupplung 67, für den dritten Gang die Kupplungen 56 und 67 und für den vierten Gang die Kupplungen 14 und 67 geschlossen. Für den fünften Gang müssen die Kupplungen 14, 56 und 67 geschlossen werden. Gemäß Fig. 3 ergibt sich der sechste Gang durch Schließen der Bremse 03 sowie der Kupplungen 14 und 56; der siebte Gang erfordert die Kupplung 14 sowie die Bremsen 03 und 5. Für den Rückwärtsgang werden die Bremsen 03 und 04 sowie die Kupplung 56 geschlossen.

Gemäß der Erfindung ist es möglich, an jeder geeigneten Stelle des Mehrstufengetriebes zusätzliche Freiläufe vorzusehen, beispielsweise zwischen einer Welle und dem Gehäuse oder um zwei Wellen gegebenenfalls zu verbinden.

Zudem ist es durch die erfindungsgemäße Bauweise möglich, Antrieb und Abtrieb vorzugsweise für Quer-, Front-Längs-, Heck-Längs- oder Allradanordnungen auf der gleichen Seite des Getriebes bzw. des Gehäuses anzuordnen. Auf der Antriebsseite oder auf der Abtriebsseite können zudem ein Achsdifferential und/oder ein Verteilerdifferential angeordnet werden.

Im Rahmen einer vorteilhaften Weiterbildung kann die Antriebswelle 1 durch ein Kupplungselement von einem Antriebs-Motor nach Bedarf getrennt werden, wobei als Kupplungselement ein hydrodynamischer Wandler, eine hydraulische Kupplung, eine trockene Anfahrkupplung, eine nasse Anfahrkupplung, eine Magnetpulverkupplung oder eine Fliehkraftkupplung einsetzbar sind. Es ist aucn moglich, ein derartiges Anfahrelement in Kraftflussrichtung hinter dem Getriebe anzuordnen, wobei in diesem Fall die Antriebswelle 1 ständig mit der Kurbelwelle des Motors verbunden ist. Das Anfahren kann gemäß der Erfindung auch mittels eines Schaltelements des Getriebes erfolgen. Bevorzugt kann als Anfahrelement die Bremse 04, die sowohl im ersten Vorwärtsgang als auch im ersten Rückwärtsgang aktiviert ist, verwendet werden.

Das erfindungsgemäße Mehrstufengetriebe ermöglicht außerdem die Anordnung eines Torsionsschwingungsdämpfers zwischen Motor und Getriebe.

Im Rahmen einer weiteren, nicht dargestellten Ausführungsform der Erfindung kann auf jeder Welle, bevorzugt auf der Antriebswelle 1 oder der Abtriebswelle 2, eine verschleißfreie Bremse, wie z. B. ein hydraulischer oder elektrischer Retarder oder dergleichen, angeordnet sein, welches insbesondere für den Einsatz in Nutzkraftfahrzeugen von besonderer Bedeutung ist. Des weiteren kann zum Antrieb von zusätzlichen Aggregaten auf jeder Welle, bevorzugt auf der Antriebswelle 1 oder der Abtriebswelle 2, ein Nebenabtrieb vorgesehen sein.

Die eingesetzten Schaltelemente können als lastschaltende Kupplungen oder Bremsen ausgebildet sein. Insbesondere können kraftschlüssige Kupplungen oder Bremsen, wie z. B. Lamellenkupplungen, Bandbremsen und/oder Konuskupplungen, verwendet werden. Des weiteren können als Schaltelemente auch formschlüssige Bremsen und/oder Kupplungen, wie z. B. Synchronisierungen oder Klauenkupplungen eingesetzt werden.

Ein weiterer Vorteil des hier vorgestellten Mehrstufengetriebes besteht darin, dass auf jeder Welle als Generator und/oder als zusätzliche Antriebsmaschine eine elektrische Maschine anbringbar ist.

Die funktionalen Merkmale der Ansprüche können konstruktiv auf verschiedenartigste Weise ausgebildet sein. Der Einfachheit halber sind diese konstruktiven Ausbildungsmöglichkeiten nicht explizit beschrieben. Selbstverständlich fällt jedoch jede konstruktive Ausbildung der Erfindung, insbesondere jede räumliche Anordnung der Planetensätze und der Schaltelemente an sich sowie zueinander und soweit technisch sinnvoll, unter den Schutzumfang der Ansprüche.

### Bezugszeichen

- 1: Welle
- 2: Welle
- 3: Welle
- 4: Welle
- 5: Welle
- 6: Welle
- 7: Welle
- 03: Bremse
- 04: Bremse
- 05: Bremse
- 14: Kupplung
- 56: Kupplung
- 67: Kupplung

- P1: Planetensatz
- P2: Planetensatz
- P3: Planetensatz
- An: Antrieb
- Ab: Abtrieb
- i: Übersetzung
- ϕ: Stufensprung
- G: Gehäuse

## Patentansprüche

1. Mehrstufengetriebe in Planetenbauweise, insbesondere ein Automatgetriebe für ein Kraftfahrzeug, umfassend eine Antriebswelle (i) und eine Abtriebswelle (2), welche in einem Gehäuse (G) angeordnet sind, drei Einsteg-Planetensätze (P1, P2, P3), mindestens sieben drehbare Wellen (1, 2, 3, 4, 5, 6, 7) sowie mindestens sechs Schaltelemente (03, 04, 05, 14, 56, 67), umfassend Bremsen und Kupplungen, deren selektives Eingreifen verschiedene Übersetzungsverhältnisse zwischen der Antriebswelle (1) und der Abtriebswelle (2) bewirkt, sodass sieben Vorwärtsgänge und ein Rückwärtsgang realisierbar sind, wobei der Antrieb durch die Antriebswelle erfolgt, welche ständig mit einem Element des ersten Planetensatzes (P1) verbunden ist, wobei eine drittes welle (3) ständig mit einem weiteren Element des ersten Planetensatzes (P1) verbunden ist, eine vierte Welle (4), wobei eine fünfte welle ständig mit dem Sonnenrad des dritten Planetensatzes (P3) verbunden ist, wobei eine sechster Welle (6) ständig mit dem Hohlrad des ersten Planetensatzes (P1) verbunden ist, wobei eine siebte. Welle (7) mit dem Sonnenrad des zweiten Planetensatzes (P2) verbunden ist wobei eine Kupplung (56) die Welle fünfte (5) und die sechste Welle (6) lösbar miteinander verbindet und wobei eine Kupplung (67) die sechste Welle (6) und die siebter Welle (7) lösbar miteinander verbindet, **dadurch gekennzeichnet , dass** der Abtrieb über die Abtriebswelle (2) erfolgt, welche ständig mit dem Steg des zweiten Planetensatzes (P2) und dem Steg des dritten Planetensatzes (P3) verbunden ist dass die vierte Welle (4) ständig mit dem Hohlrad des zweiten Planetensatzes (P2) und dem Hohlrad des dritten Planetensatzes (P3) verbunden ist wobei die dritte welle (3) durch eine erste Bremse (03) an das Gehäuse (G) ankoppelbar ist, die vierte Welle (4) durch eine weite Bremse (04) an das (G) ankoppelbar ist, die fünfte Welle (5) durch eine dritte Bremse (05) an das Gehäuse (G) ankoppelbar ist, eine Kupplung (14) die Antriebswelle (1) und die vierten Welle (4), lösbar miteinander verbindet.

2. Mehrstufengetriebe nach Anspruch 1, **dadurch gekennzeichnet,** das die Antriebswelle (1) ständig mit dem Steg des ersten Planetensatzes (P1) verbunden ist und dass die dritter Welle (3) ständig mit dem Sonnenrad des ersten Planetensatzes (P1) verbunden ist.

3. Mehrstufengetriebe nach Anspruch 1, **dadurch gekennzeichnet, dass** die Antriebswelle (1) ständig mit dem Sonennrad des ersten Planetensatzes (P1) verbunden ist und dass die dritte Welle (3) ständig mit dem Steg des ersten Planetensatzes (P1) verbunden ist.

4. Mehrstufengetriebe nach einem der Ansprüche 1 bis 3, **dadurch gekennzeichnet , dass** der erste Planetensatz (P1) und der dritte Planetensatz (P3) als Plus-Planetensätze ausgebildet sind und dass der zweite Planetensatz (P2) als Minus-Planetensatz ausgebildet ist.

5. Mehrstufengetriebe nach Anspruch 4, **dadurch gekennzeichnet , dass** der zweite Planetensatz (P2) und der dritte Planetensatz (P3) als Ravigneaux-Planetensatz mit einem gemeinsamen Steg und einem gemeinsamen Hohlrad zusammengefasst sind.

6. Mehrstufengetriebe nach einem der vorstehenden Ansprüche, **dadurch gekennzeichnet , dass** an jeder geeigneten Stelle zusätzliche Freiläufe einsetzbar sind.

7. Mehrstufengetriebe nach Anspruch 6, **dadurch gekennzeichnet , dass** die Freiläufe zwischen den Wellen (1, 3, 3, 4, 5, 6, 7) und dem Gehäuse (G) vorgesehen sind.

8. Mehrstufengetriebe nach einem der vorstehenden Ansprüche, **dadurch gekennzeichnet dass** Antrieb und Abtrieb auf der gleichen Seite des Gehäuses vorgesehen sind.

9. Mehrstufengetriebe nach einem der vorstehenden Ansprüche, **dadurch gekennzeichnet , dass** ein Achs- und/oder ein Verteilerdifferential auf der Antriebsseite oder der Abtriebsseite angeordnet ist.

10. Mehrstufengetriebe nach einem der vorstehenden Ansprüche, **dadurch gekennzeichnet , dass** die Antriebswelle (1) durch ein Kupplungselement von einem Antriebs-Motor trennbar ist.

11. Mehrstufengetriebe nach Anspruch 10, **dadurch gekennzeichnet , dass** als Kupplungselement ein hydrodynamischer Wandler, eine hydraulische Kupplung, eine trockene Anfahrkupplung, eine nasse Anfahrkupplung, eine Magnetpulverkupplung oder eine Fliehkraftkupplung vorgesehen ist.

12. Mehrstufengetriebe nach einem der vorstehenden Ansprüche, **dadurch gekennzeichnet , dass** in Kraftflussrichtung hinter dem Getriebe ein externes Anfahrelement, insbesondere nach Anspruch 10, anordbar ist, wobei die Antriebswelle (1) fest mit der Kurbelwelle des Motors verbunden ist.

13. Mehrstufengetriebe nach einem der vorstehenden Ansprüche, **dadurch gekennzeichnet , dass** das Anfahren mittels eines Schaltelements des Getriebes erfolgt, wobei die Antriebswelle (1) ständig mit der Kurbelwelle des Motors verbunden ist.

14. Mehrstufengetriebe nach Anspruch 13, **dadurch gekennzeichnet , dass** als Schaltelement die erste Bremse (03) oder die zweite Bremse (04) einsetzbar ist.

15. Mehrstufengetriebe nach einem der vorstehenden Ansprüche, **dadurch gekennzeichnet , dass** zwischen Motor und Getriebe ein Torsionsschwingungsdämpfer anordbar ist.

16. Mehrstufengetriebe nach einem der vorstehenden Ansprüche, **dadurch gekennzeichnet , dass** auf jeder Welle eine verschleißfreie Bremse anordbar ist.

17. Mehrstufengetriebe nach einem der vorstehenden Ansprüche, **dadurch gekennzeichnet , dass** zum Antrieb von zusätzlichen Aggregaten auf jeder Welle ein Nebenabtrieb anordbar ist.

18. Mehrstufengetriebe nach Anspruch 17, **dadurch gekennzeichnet , dass** der Nebenabtrieb auf der Antriebswelle (1)' oder der Abtriebswelle (2) anordbar ist.

19. Mehrstufengetriebe nach einem der vorstehenden Ansprüche, **dadurch gekennzeichnet , dass** die Schaltelemente als lastschaltende Kupplungen oder Bremsen ausgebildet sind.

20. Mehrstufengetriebe nach Anspruch 19, **dadurch gekennzeichnet , dass** Lamellenkupplungen, Bandbremsen und/oder Konuskupplungen einsetzbar sind.

21. Mehrstufengetriebe nach einem der Ansprüche 1 bis 18, **dadurch gekennzeichnet, dass** als Schaltelemente formschlüssige Bremsen und/oder Kupplungen vorgesehen sind.

22. Mehrstufengetriebe nach einem der vorstehenden Ansprüche, **dadurch gekennzeichnet, dass** auf jeder Welle als Generator und/oder als zusätzliche Antriebsmaschine eine elektrische Maschine anbringbar ist.

## Claims

1. Multistage transmission of a planetary design, in particular for an automatic transmission for a motor vehicle, comprising an input shaft (1) and an output shaft (2) disposed in a housing (G), three spider-mounted planetary gear sets (P1, P2, P3), at least seven rotatable shafts (1, 2, 3, 4, 5, 6, 7) as well as at least six switching elements (03, 04, 05, 14, 56, 67) comprising brakes and clutches, the selective engagement of which results in different transmission ratios between the input shaft (1) and the output shaft (2) so that seven forward gears and a reverse gear can be obtained, and the input takes place via the input shaft which is permanently connected to an element of the first planetary gear set (P1), and a third shaft (3) is permanently connected to another element of the first planetary gear set (P1), a fourth shaft (4), and a fifth shaft is permanently connected to the sun gear of the third planetary gear set (P3), and a sixth shaft (6) is permanently connected to the annulus of the first planetary gear set (P1), and a seventh shaft (7) is connected to the sun gear of the second planetary gear set (P2), and a clutch (56) releasably connects the fifth shaft (5) and the sixth shaft (6) to one another and a clutch (67) releasably connects the sixth shaft (6) and the seventh shaft (7) to one another, **characterised in that** the output takes place via the output shaft (2) which is permanently connected to the spider of the second planetary gear set (P2) and to the spider of the third planetary gear set (P3), the fourth shaft (4) is permanently connected to the annulus of the second planetary gear set (P2) and to the annulus of the third planetary gear set (P3), and the third shaft (3) can be coupled with the housing (G) via a first brake (03), the fourth shaft (4) can be coupled with the housing (G) via a second brake (04), the fifth shaft (5) can be coupled with the housing (G) via a third brake (05), and a clutch (14) releasably connects the input shaft (1) and the fourth shaft (4) to one another.

2. Multistage transmission as claimed in claim 1, **characterised in that** the input shaft (1) is permanently connected to the spider of the first planetary gear set (P1) and the third shaft (3) is permanently connected to the sun gear of the first planetary gear set (P1).

3. Multistage transmission as claimed in claim 1, **characterised in that** the input shaft (1) is permanently connected to the sun gear of the first planetary gear set (P1) and the third shaft (3) is permanently connected to the spider of the first planetary gear set (P1).

4. Multistage transmission as claimed in one of claims 1 to 3, **characterised in that** the first planetary gear set (P1) and the third planetary gear set (P3) are provided in the form of plus planetary gear sets and the second planetary gear set (P2) is provided as a minus planetary gear set.

5. Multistage transmission as claimed in claim 4, **characterised in that** the second planetary gear set (P2) and the third planetary gear set (P3) are grouped as a Ravigneaux planetary gear set with a common spider and a common annulus.

6. Multistage transmission as claimed in one of the preceding claims, **characterised in that** additional freewheels may be used at any appropriate point.

7. Multistage transmission as claimed in claim 6, **characterised in that** the freewheels are provided between the shafts (1, 2, 3, 4, 5, 6, 7) and the housing (G).

8. Multistage transmission as claimed in one of the preceding claims, **characterised in that** the input and output are provided on the same side of the housing.

9. Multistage transmission as claimed in one of the preceding claims, **characterised in that** an axle differential and/or a distributor differential is disposed on the input side or the output side.

10. Multistage transmission as claimed in one of the preceding claims, **characterised in that** the input shaft (1) can be separated from a drive motor by means of a coupling element.

11. Multistage transmission as claimed in claim 10, **characterised in that** a hydrodynamic converter, a hydraulic clutch, a dry starting clutch, a wet starting clutch, an electromagnetic clutch or a centrifugal clutch is provided as a coupling element.

12. Multistage transmission as claimed in one of the preceding claims, **characterised in that** an external starting element, in particular of the type claimed in claim 10, may be disposed after the transmission in the power flow direction, and the input shaft (1) is permanently connected to the crankshaft of the engine.

13. Multistage transmission as claimed in one of the preceding claims, **characterised in that** start-up takes place by means of a switching element of the transmission, and the input shaft (1) is permanently connected to the crankshaft of the engine.

14. Multistage transmission as claimed in claim 13, **characterised in that** the first brake (03) or the second brake (04) may be used as the switching element.

15. Multistage transmission as claimed in one of the preceding claims, **characterised in that** a torsional vibration damper may be disposed between the engine and transmission.

16. Multistage transmission as claimed in one of the preceding claims, **characterised in that** a wear-free brake may be disposed on any shaft.

17. Multistage transmission as claimed in one of the preceding claims, **characterised in that** an auxiliary output may be provided on any shaft for driving additional units.

18. Multistage transmission as claimed in claim 17, **characterised in that** the auxiliary output may be disposed on the input shaft (1) or the output shaft (2).

19. Multistage transmission as claimed in one of the preceding claims, **characterised in that** the switching elements are provided in the form of load-switching clutches or brakes.

20. Multistage transmission as claimed in claim 19, **characterised in that** disc clutches, band brakes and/or cone clutches may be used.

21. Multistage transmission as claimed in one of claims 1 to 18, **characterised in that** positively acting brakes and/or clutches are provided as switching elements.

22. Multistage transmission as claimed in one of the preceding claims, **characterised in that** an electric motor may be mounted on any shaft as a generator and/or as an additional drive motor.

## Revendications

1. Boîte de vitesses à étages multiples du type épicycloïdal, en particulier boîte de vitesses automatique pour véhicule automobile, comprenant un arbre d'entrée (1) et un arbre de sortie (2) qui sont montés dans un carter (G), trois trains épicycloïdaux (P1, P2, P3) à un porte-satellites, au moins sept arbres rotatifs (1, 2, 3, 4, 5, 6, 7), ainsi qu'au moins six éléments de commande (03, 04, 05, 14, 56, 67) comprenant des freins et des embrayages dont l'intervention sélective produit différents rapports de transmission entre l'arbre d'entrée (1) et l'arbre de sortie (2), de sorte qu'il est possible de réaliser six rapports de marche avant et un rapport de marche arrière, dans laquelle l'entraînement s'effectue par l'arbre d'entrée qui est relié en permanence à un élément du premier train épicycloïdal (P1), dans laquelle un troisième arbre (3) est relié en permanence à un autre élément du premier train épicycloïdal (P1), un quatrième arbre (4), dans laquelle un cinquième arbre est relié en permanence à la roue planétaire du troisième train épicycloïdal (P3), dans laquelle un sixième arbre (6) est relié en permanence à la couronne à denture intérieure du premier train épicycloïdal (P1), dans laquelle un septième arbre (7) est relié à la roue planétaire du deuxième train épicycloïdal (P2), dans laquelle un embrayage (56) relie le cinquième arbre (5) et le sixième arbre (6) l'un à l'autre de façon séparable et dans laquelle un embrayage (67) relie le sixième arbre (6) et le septième arbre (7) l'un à l'autre de façon séparable, **caractérisée en ce que** la sortie s'effectue au moyen de l'arbre de sortie (2) qui est relié en permanence au porte-satellites du deuxième train épicycloïdal (P2) et au porte-satellites du troisième train épicycloïdal (P3), **en ce que** le quatrième arbre (4) est relié en permanence à la couronne à denture intérieure du deuxième train épicycloïdal (P2) et à la couronne à denture intérieure du troisième train épicycloïdal (P3), le troisième arbre (3) pouvant être accouplé au carter (G) par un premier frein (03), le quatrième arbre (4) pouvant être accouplé au carter (G) par un quatrième frein (04), le cinquième arbre (5) pouvant être accouplé au carter (G) par un troisième frein (05), et un embrayage (14) reliant l'arbre d'entrée (1) et le quatrième arbre (4) l'un à l'autre de façon séparable.

2. Boîte de vitesses à étages multiples selon la revendication 1, **caractérisée en ce que** l'arbre d'entrée (1) est relié en permanence au porte-satellites du premier train épicycloïdal (P1) et **en ce que** le troisième arbre (3) est relié en permanence à la roue planétaire du premier train épicycloïdal (P1).

3. Boîte de vitesses à étages multiples selon la revendication 1, **caractérisée en ce que** l'arbre d'entrée (1) est relié en permanence à la roue planétaire du premier train épicycloïdal (P1) et **en ce que** le troisième arbre (3) est relié en permanence au porte-satellites du premier train épicycloïdal (P1).

4. Boîte de vitesses à étages multiples selon l'une des revendications 1 à 3, **caractérisée en ce que** le premier train épicycloïdal (P1) et le troisième train épicycloïdal (P3) sont constitués par des trains épicycloïdaux multiplicateurs et le deuxième train épicycloïdal (P2) est constitué par un train épicycloïdal réducteur.

5. Boîte de vitesses à étages multiples selon la revendication 4, **caractérisée en ce que** le deuxième train épicycloïdal (P2) et le troisième train épicycloïdal (P3) sont regroupés en un train épicycloïdal de Ravigneaux comprenant un porte-satellites commun et une couronne à denture intérieure commune.

6. Boîte de vitesses à étages multiples selon l'une des revendications précédentes, **caractérisée en ce que** des roues libres additionnelles peuvent être montées en tous les points appropriés.

7. Boîte de vitesses à étages multiples selon la revendication 6, **caractérisée en ce que** les roues libres sont prévues entre les arbres (1, 2, 3, 4, 5, 6, 7) et le carter (G).

8. Boîte de vitesses à étages multiples selon l'une des revendications précédentes, **caractérisée en ce que** l'entrée et la sortie sont prévues sur le même côté du carter.

9. Boîte de vitesses à étages multiples selon l'une des revendications précédentes, **caractérisée en ce qu'un** différentiel d'essieu et/ou un différentiel de boîte de transfert sont montés sur le côté d'entrée ou sur le côté de sortie.

10. Boîte de vitesses à étages multiples selon l'une des revendications précédentes, **caractérisée en ce que** l'arbre d'entrée (1) peut être séparé d'un moteur d'entraînement par un élément d'embrayage.

11. Boîte de vitesses à étages multiples selon la revendication 10, **carac**térisé**e en ce que,** comme élément d'embrayage, il est prévu un convertisseur hydrodynamique, un embrayage hydraulique, un embrayage de démarrage à sec, un embrayage de démarrage humide, un embrayage à poudre magnétique ou un embrayage centrifuge.

12. Boîte de vitesses à étages multiples selon l'une des revendications précédentes, **caractérisée en ce qu'en** aval de la boîte de vitesses, vu dans le sens du flux de force, peut être agencé un élément de démarrage extérieur, en particulier selon la revendication 10, l'arbre d'entrée (1) étant alors relié solidairement au vilebrequin du moteur.

13. Boîte de vitesses à étages multiples selon l'une des revendications précédentes, **caractérisée en ce que** le démarrage s'effectue au moyen d'un élément de commande de la boîte de vitesses, l'arbre d'entrée (1) étant relié en permanence au vilebrequin du moteur.

14. Boîte de vitesses à étages multiples selon la revendication 13, **caractérisée en ce que** le premier frein (03) ou le deuxième frein (04) peut être utilisé comme élément de commande.

15. Boîte de vitesses à étages multiples selon l'une des revendications précédentes, **caractérisée en ce qu'un** amortisseur de vibrations de torsion peut être monté entre le moteur et la boîte de vitesses.

16. Boîte de vitesses à étages multiples selon l'une des revendications précédentes, **caractérisée en ce qu'un** frein sans usure peut être monté sur chaque arbre.

17. Boîte de vitesses à étages multiples selon l'une des revendications précédentes, c**aractérisée en ce qu'une** prise de force peut être montée sur chacun des arbres pour l'entraînement de groupes additionnels.

18. Boîte de vitesses à étages multiples selon la revendication 17, **caractérisée en ce que** la prise de force peut être montée sur l'arbre d'entrée (1) ou sur l'arbre de sortie (2).

19. Boîte de vitesses à étages multiples selon l'une des revendications précédentes, **caractérisée en ce que** les éléments de commande sont constitués par des embrayages ou freins pouvant commuter en charge.

20. Boîte de vitesses à étages multiples selon la revendication 19, **caractérisée en ce que** des embrayages à disques, des freins à bande et/ou des embrayages à cônes peuvent y être utilisés.

21. Boîte de vitesses à étages multiples selon l'une des revendications 1 à 18, **caractérisée en ce qu'il** est prévu comme éléments de commande des freins et/ou embrayages agissant par complémentarité de forme.

22. Boîte de vitesses à étages multiples selon l'une des revendications précédentes, **caractérisée en ce qu'une** machine électrique peut être montée sur chaque arbre en qualité de génératrice et/ou de machine motrice additionnelle.
